(19) Europäisches Patentamt
European Patent Office
Office européen des brevets

(11) **EP 2 685 351 A1**

(12) **EUROPEAN PATENT APPLICATION**

(43) Date of publication:
**15.01.2014 Bulletin 2014/03**

(51) Int Cl.:
**G06F 3/01** (2006.01)   **G06K 9/00** (2006.01)
**G06K 9/46** (2006.01)   **G06T 7/20** (2006.01)

(21) Application number: **12305824.0**

(22) Date of filing: **10.07.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing**
**92130 Issy-les-Moulineaux (FR)**

(72) Inventors:
• **Nguyen, Phi-Bang**
**35700 Rennes (VN)**

• **Fleureau, Julien**
**35000 Rennes (FR)**
• **Chamaret, Christel**
**35135 Chantepie (FR)**
• **Guillotel, Philippe**
**35770 Vern sur Seiche (FR)**

(74) Representative: **Thies, Stephan**
**Deutsche Thomson OHG**
**European Patent Operations**
**Karl-Wiechert-Allee 74**
**30625 Hannover (DE)**

(54) **Method for calibration free gaze tracking using low cost camera**

(57)     The present invention relates to a method for eye gaze estimation with regard to a sequence of images. The method comprises the following steps:
- determining a visual saliency map for an image;
- using the visual saliency map for the image as an a-priori probability distribution of expected eye gaze;
- receiving a sequence of pictures of the eyes of a user related to the sequence of images, the sequence of pictures of the eyes of a user being acquired with a camera for determining eye appearance;
- determining a sequence of saliency maps related to the sequence of images;
- determining eye gaze in a recursive manner based on the sequentially received pictures of the eyes of the user and the correspondingly determined sequence of visual saliency maps.

Fig. 2

EP 2 685 351 A1

**Description**

The present invention relates to a method for eye gaze estimation with regard to a sequence of images.

Human is the most central factor in all fields of life. Vision is the most essential sense of human-being; about 80-90% of neurons in the human brain are assumed to be involved in visual perception. Eye gaze is considered as an important cue that may reveal useful and irrefutable information from the human mind. The eye gaze is believed to reflect the attention, the behavior and somehow, the emotion of a person within a visual context. In practice, the process of interpretation of eye gaze may be involved in various applications of Human Computer Interaction (HCI) as gaze-based interactive user interfaces, adaptive and interactive content presentation, virtual reality, human behavior study and diagnostic applications, etc. Therefore, eye gaze estimation has become an active research domain during the last several decades but remains a challenging topic due to different difficult aspects of the problem. eye gaze trackers can be generally classified into two categories: intrusive and remote systems according to the way the equipments make contact with the subject. One of the earliest intrusive gaze tracker is based on special contact lens fixed on the eyes that allow to detect its position. These contact lenses contain a sensor (a mirror or an induction coil) that is used to reflect light or to measure the eye position in a high-frequency electromagnetic field. Although providing high accuracy, this method is only suited for medical or cognitive studies due to its uncomfortable and obtrusive use. Electrooculography (EOG) based methods make use of the fact that an electrostatic field exists when eyes rotate. By measuring the electric potential differences of the skin regions around the eyes (with electrodes), the position of the eye can be estimated. EOG technique provides a reliable measurement with simple configuration which enables recording in dark environment (where video-oculography is useless) and which doesn't require the eyes to be opened. The major problem is that the EOG signal suffers from noise due to eye blinking, movement of facial muscles and EOG potential drift (especially in long recording experiments). Video-oculography techniques can also be classified as intrusive methods if they are used in a head-mounted system. In general, an intrusive method allows a high accuracy and free head movement but the main drawback is that it requires close contact to the user that is only restricted to laboratory experiments.

For everyday applications, nonintrusive (or remote) methods are therefore much more preferred. For this category, video-based techniques are the most widely used. We can distinguish two groups of methods: (geometric) model-based and appearance-based methods. The former uses 3D geometric models of the eye to estimate the gaze. The point of regard is determined as the intersection between the 3D gaze direction (composed of the optical axis and the visual axis) and the screen plane. Majority of model-based methods are based on the corneal reflection technique with the use of additional light sources, generally infrared light, to illuminate the eyes. The main idea is to estimate the gaze from the relative position between the pupil center and the glint - the brightest light spot on the eye due to reflection.

In contrast, appearance based methods consider the gaze estimation as a 2D mapping problem between the image features of the eyes and the positions of the gaze on the screen. The mapping function can be found by training a multi-layer neural network, or a regression model like Gaussian process regression or by using a non-linear manifold embedding technique such as Locally Linear Embedding to reduce the high dimensional eye image to 2 dimensions and derive the gaze by linear combination in the low-dimensional space.

Geometric model based approach is generally more accurate (less than one degree) and widely used in commercial eye tracker. However, it requires high resolution camera and additional light sources. Current appearance-based methods are known to be less accurate (with an accuracy of several degrees). More accurate appearance-based methods are known, which can achieve less than one degree of accuracy but with the expense of using extensive calibration points, e.g. disclosed by K. H. Tan, D. J. Kriegman, and N. Ahuja, "Appearance-based eye gaze estimation", Proceedings of the Sixth IEEE Workshop on Applications of Computer Vision (WACV), pages 191-195, 2002.

Almost all current gaze tracking techniques require a calibration process in order to infer certain person-specific eye parameters (in case of geometric based methods) or to regress the corresponding mapping function between the eye movement and the screen (in case of appearance-based methods). Such a process is quite cumbersome, uncomfortable and difficult to be done. Moreover, in some consumer home applications such as interactive game interfaces or adaptive content selection interfaces, active calibration is almost impossible because the eye tracking is required to be transparent to users. Eye gaze estimation methods that do not require explicit calibration exist. However, their model-based method requires multiple cameras and IR light sources.

Another approach focused on using visual saliency as a prior information of the probability distribution of gaze. Y. Sugano, Y. Matsushita, and Y. Sato, "Calibration-free gaze sensing using saliency maps", In Proc. of the 23rd IEEE Conference on Computer, Vision and Pattern Recognition (CVPR), June 2010 propose that if the consecutive eye appearances do not change much, it is evident that the user is focusing on the same fixation point. By clustering and averaging all the training video, a set of "fixation groups" is obtained, each composed of an averaged gaze probability map and its corresponding averaged eye image. These data are served to learn a Gaussian process regression (GPR). Due to the lack of the "true" positions of the gaze points (only the gaze probability is known instead), the training process of the GPR are done thanks to a Monte-Carlo approximation (i.e. samples are generated according to the averaged gaze probability map). However, this approach has some limits. Firstly, in order to go into operating mode, the system needs an off-line and time-consumming training beforehand (i.e. 10 minutes of training for a 10 minutes test). Secondly, the method makes use of many parameters that are empirically determined. Thirdly, in order for the Monte Carlo approximation to reach a desire accuracy, many samples are required at the expense of a significantly increasing computational cost. Nevertheless, the method only achieves a low accuracy of six degrees due to the fact that it is entirely based on saliency information which is not always reliable.

R. Valenti, N. Sebe, and T. Gevers, "What are you looking at? improving visual gaze estimation by saliency", International Journal of Computer Vision, 2012, discloses the use of saliency maps in a post-hoc processing stage to improve the performance of any gaze estimation systems. The foveated region is modelled as a Gaussian kernel around the estimated fixation point. The saliency map is then computed. A meanshift window which is initialized at the fixation point is used to find the closest maxima in the saliency map which is considered as the new corrected gaze point. By assuming that the error in a gaze tracker is identical and affine (e.g. shift or scale), the correction matrix can be obtained by applying a weighted least-square minimization between the estimated and the corrected gazes.

The existing eye gaze sensing systems are far from being widely used in consumer home applications because of two main reasons. The cost of such a system is still high and most systems require a cumbersome and time-consuming calibration procedure.

It is an object of the present invention to propose a method for eye gaze estimation which overcomes the above mentioned disadvantages.

According to the invention, a method to estimate eye gaze estimation with regard to a sequence of images is proposed. As a first step, a visual saliency map for an image, which is a start image in the method is determined. This visual saliency map is used as an a-priori probability distribution of expected eye gaze. Subsequently, a sequence of pictures of the eyes of a user is received. The sequence of pictures of the eyes of a user being acquired with a camera for determining eye appearance, e.g. a conventional web camera. The received pictures are related to the sequence of images, thus, each image of the sequence of images has a corresponding picture of eyes, which is captured when a user is watching said image. Also, only acquiring and receiving pictures of the eyes of a user for every second image of the sequence of images, or for every third image of the sequence of images, or only for distinguished images of the sequence of images is within the scope of the invention. As a following step, a sequence of saliency maps of the images for which a related picture of the eyes of a user was acquired is determined. Then, eye gaze is determined in a recursive manner based on the sequentially received pictures of the eyes of the user and the correspondingly determined sequence of visual saliency maps. The method according to the invention has the advantage that it is a calibration-free gaze tracking method for which good and accurate results are received even with low cost equipment, e.g. such as a low cost web camera. In addition, it is a appearance based model, which is not as complex as geometric model based methods are. Further, it is a remote system which is much more convenient to a user than intrusive methods. The method employs visual saliency in a sophisticated manner to design a transparent calibration gaze sensing system. Using a Bayesian probabilistic framework, gaze positions are inferred with two sources of information, one comes from the eye appearance and the other comes from the visual saliency obtained from the sequence of images, such as a video clip. The method uses the saliency information as an a priori probability distribution of gaze. The final gaze is computed as an a posteriori probability given both the eye appearance and the visual saliency. This has the advantage that the system is much more accurate than conventional visual saliency based methods. In addition, the system allows continuous learning and improving accuracy while the method is executed and does not need to be trained or calibrated in an off-line stage.

Preferably, particle filtering methods are used for determining eye gaze in a recursive manner. The particle filtering method comprises the steps of propagation/diffusion of eye gaze, updating of the weights of particles, normalizing the weights, selecting particles with maximum weights and estimate eye gaze, and updating eye gaze if a confidence score is greater than a minimum confidence score. In an advantageous alternative, the particle filtering method is a cascaded method.

Preferably, determining the eye gaze in a recursive manner is made with the assumption that a current state only depends on the previous state. This has the advantage that a first order Markov process can be used under this assumption.

Preferably, eye pictures and the images are conditionally independent. This has the advantage that straight forward computation of the a posteriori probability can be employed.

Preferably, the particle filtering uses a high density of particles in prosperous regions and a low density of particles in less probable regions. This has the advantage that computational costs are addressed, while maintaining accuracy.

For better understanding the invention shall now be explained in more detail in the following description with reference to the figures. It is understood that the invention is not limited to this exemplary embodiment and that specified features can also expediently be combined and/or modified without departing from the scope of the present invention.

Fig. 1 shows a user interface related to the eye gaze estimation method
Fig. 2 discloses the probabilistic relationship of the stimulus image, eye picture and eye gaze

Fig. 3 discloses eye gaze estimation without calibration in a two-stage cascade particle filtering framework
Fig. 4 discloses a typical one stage implementation of the inventive method
Fig. 5 discloses a typical two stage implementation of the inventive method
Fig. 6 discloses results of eye gaze estimation according to the invention
Fig. 7 discloses a zoomed view of Fig. 6

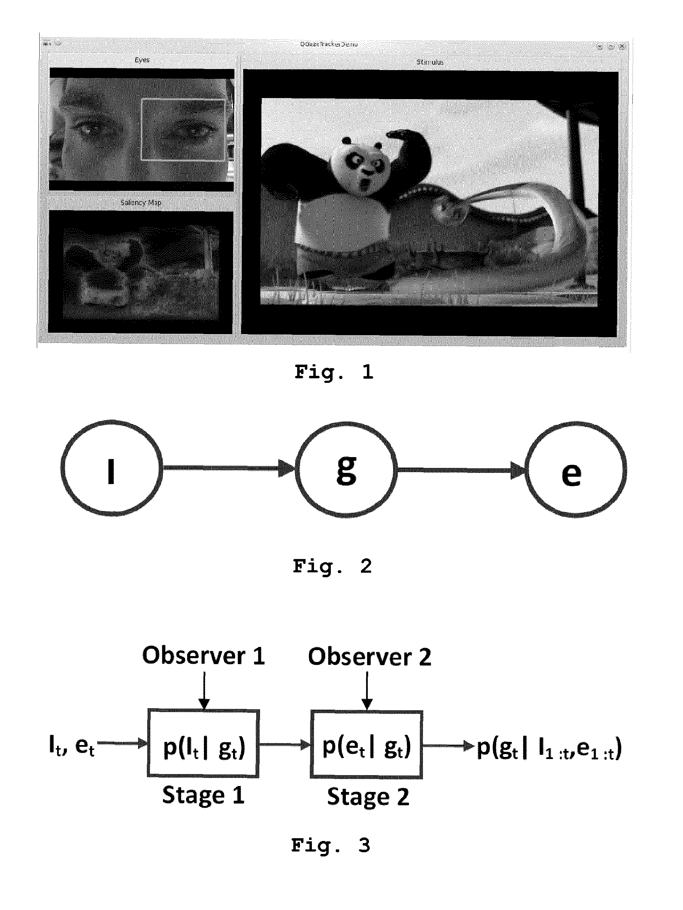

Fig. 1 shows a user interface related to the eye gaze estimation method according to the invention. In the right window, an image from a sequence of images such as a video clip can be seen. In the upper left window, a picture of the face of a user which is acquired, e.g. by a low cost web camera, can be seen. The picture is acquired while the user is watching the image which is displayed in the right window. In the lower left window, a visual saliency map of the image displayed in the right window is shown. This saliency map is determined from the image. When a user watches a video clip, a sequence of images is available.

For each image of this sequence of images, an eye picture shown in the upper left window is acquired and a visual saliency map shown in the lower left window is determined. Alternatively, only for every second image of the sequence of images, for every third image or the like or only for dedicated images of the sequence of images, eye pictures are acquired and visual saliency maps are determined by a known process.

Fig. 2 graphically shows a method for determining the eye gaze of a user.

From the most general viewpoint, a gaze sensing system is a black box that receives as input two sources of information: the visual content (images/videos) and the user's appearance (typically his/her eye images) and outputs the most probable gaze points. The relationship of the stimulus image (I), the eye gaze (g) and the eye image (e) is illustrated via a probabilistic graphical model as shown in Fig. 2. This model describes a Bayesian Network (BN) in which the nodes represent the random variables and the directed edges represent their conditional dependencies. The nodes which are not connected are conditionally independent of each other. Based on this BN, the gaze point is estimated according to the a posteriori probability $p(g_t|I_{1:t}, e_{1:t})$. By using Bayes's rule with the assumption that $I_{1:t}$ and $e_{1:t}$ are conditionally independent (as seen in Fig. 2), this probability is inferred as:

$$p(g_t|I_{1:t}, e_{1:t}) = p(g_t|I_{1:t})p(g_t|e_{1:t}) \quad (1)$$

Equation 1 characterizes a dynamic system with the state variable $g_t$ and two measurements $I_{1:t}$ and $e_{1:t}$. Assuming that it is a first order Markov process (i.e. the current state only depends on the previous state) and assuming that the observations $e_{1:t}$ and $I_{1:t}$ are conditionally independent, we obtain the familiar results as follows (chain rule):

$$
\begin{aligned}
p(g_t|I_{1:t}) &\propto p(I_t|g_t)p(g_t|I_{1:t-1}) \quad (2)\\
&= p(I_t|g_t)\int p(g_t|g_{t-1})p(g_{t-1}|I_{1:t-1})dg_{t-1}
\end{aligned}
$$

$$
\begin{aligned}
p(g_t|e_{1:t}) &\propto p(e_t|g_t)p(g_t|e_{1:t-1}) \quad (3)\\
&= p(e_t|g_t)\int p(g_t|g_{t-1})p(g_{t-1}|e_{1:t-1})dg_{t-1}
\end{aligned}
$$

where $p(g_t|g_{t-1})$ is the transition density and $p(I_t|g_t)$ as well as $p(e_t|g_t)$ are the observation likelihoods associate to the stimulus image and eye pictures. If the linear assumption and the Gaussian assumptions of the state noise and measurement noise are valid, Equation 2 and 3 have optimal solutions by using the Kalman filter method. In contrast, the particle filter framework is widely adopted as a suboptimal alternative (that preserves the Kalman filter principle) to tackle the problem regardless of the underlying distribution. It approximates the posterior probability density $p(x_t|y_{1:t})$ (where $x_t$ is the state variable and $y_{1:t}$ is the observations) via two steps:

1. Prediction

$$p(x_t|y_{1:t-1}) = \int p(x_t|x_{t-1})p(x_{t-1}|y_{1:t-1})dx_{t-1}$$

which is recursively computed.

1. Update

$$p(x_t|y_{1:t}) \propto p(y_t|x_t)p(x_t|y_{1:t-1})$$

i.e. posterior = likelihood $\times$ prior.

The filtering distribution (posterior) $p(x_t|y_{1:t})$ is approximated by a finite set of particles $x_t^i$ and its associated weight $w_t^i$: $(x_t^i, w_t^i)$ for $i$ for $i = 1,...,N$.

Usually, the samples from $p(x_t|y_{1:t})$ are not drawn directly, but rather from the so-called proposal distribution q $(x_t|x_{1:t-1}, y_{1:t})$ with the weights are updated as:

$$w_t^i = w_t^{i-1} \frac{p(y_t|x_t^i)p(x_t^i|x_{t-1}^i)}{q(x_t^i|x_{1:t-1}^i, y_{1:t})} \qquad (4)$$

The trick is that we can choose q(.) freely. A common choice (easy to implement) is to use $p(x_t|x_{t-1})$ for q(.) as in the case of bootstrap filter resulting that the weights become the likelihood. Also, in order to avoid degeneracy problem, resampling can be adopted to replace the old set of particles by the new set of equally weighted particles according to their important weights.

Fig. 3 discloses gaze estimation as a parallel filter framework making use of the images of sequence of images and the eye pictures as observations in two different particle filters. However the estimated distribution of the whole filter is the expectation of the products of the two terms of the right side of Equation 1 and not the product of the expectation of those two latter terms. A correct implementation is obtained by rewriting the Equation 1 as follows:

$$p(g_t|I_{1:t}, e_{1:t}) = p(I_t, e_t|g_t)p(g_t|I_{1:t-1}, e_{1:t-1}) \qquad (5)$$

The particle filter is therefore implemented in a more conventional way as a unique particle filter. The observation likelihood is hence computed as:

$$p(I_t, e_t|g_t) = p(I_t|g_t)p(e_t|g_t) \qquad (6)$$

and the prior probability is expressed recursively (chain rule) by:

$$p(g_t|I_{1:t}, e_{1:t}) = \int p(g_t|g_{t-1})p(g_{t-1}|I_{1:t-1}, e_{1:t-1},)dg_{t-1}$$

In order to use the particle filter framework, the state transition (dynamical model) and the observation likelihood is described in the following.

The gaze position $g_t$ in an image frame is a two dimensional random vector $g_t = (x_t, y_t)$. $x_t$ and $y_t$ are considered as two independent variables centered on the previous state $g_{t-1}$ and thus modeled by the following density:

$$p(g_t|g_{t-1}) = \aleph(g_{t-1}; diag(\sigma^2)) \qquad (7)$$

where $\aleph(.)$ is the Gaussian distribution and $dlag(\sigma^2)$ is the diagonal covariance matrix. Note that $\sigma^2$ which corresponds to the variance of each independent variable $x_t$ and $y_t$ should be large enough to cover the possible range of the gaze displacement.

The first term of the observation model $p(I_t|g_t)$ is computed from the saliency map assuming that $p(g_t)$ and $p(I_t)$ are uniformly distributed:

$$p(I_t|g_t) = \frac{p(g_t|I_t).p(I_t)}{p(g_t)} \propto p(g_t|I_t) \qquad (8)$$

where $p(g_t|I_t)$ denotes the saliency map at time t.

The second term $p(e_t|g_t)$ is modelled as the similarity between the current eye feature $e_t$ and the eye feature $\hat{e}_t$ estimated from the past gazes $g_{1:t-1}$ and the past eye images $e_{1:t-1}$. This probability is modelled by the reconstruction error $\varepsilon(e_t)$ as disclosed by Y. Wu, E. Blasch, G. Chen, L. Bai, and H. Ling, "Multiple source data fusion via sparse representation for robust visual tracking", pages 1-8, July 2011.

$$p(e_t|g_t) \propto exp(-\lambda\varepsilon(e_t)) \qquad (9)$$

where $\varepsilon(e_t) = \|e_t - \hat{e}_t\|_2$

The estimation of $\hat{e}$ may be obtained via a linear regression scheme between $g_{1:t-1}$ and $e_{1:t-1}$. Let $G = [g_1, g_2, ..., g_n] \in R^{n \times 2}$ nd $E = [e_1, e_2, ..., e_n] \in R^{n \times D}$. The linear regression could be therefore defined by:

$$G.X = E \qquad (10)$$

where $X \in R^{2 \times D}$ is the projection matrix.

With the number of training samples n > 2, the equation 10 is under-determined and hence, the solutions are unstable and should not be trusted. The reason behind this fact is that the eye appearance (of high dimension) is estimated from the gaze position (of two dimensions). In some cases, the problem can be tackled by using Ridge regression but the results are still inaccurate. Moreover the linear assumption between $g_{1:t-1}$ and $e_{1:t-1}$ made in equation 10 is not valid on the whole space and is too strong. To avoid those different issues, preferably:

i) compute $p(g_t|e_t) \propto p(e_t|g_t)$ and estimate $\|g_t - \hat{g}_t\|_2$ instead of $|e_t - \hat{e}_t\|_2$,
ii) estimate $\hat{g}_t$ using a non-linear manifold embedding algorithm.

Locally Linear Embedding (LLE) assumes that on a local region, the manifold can be approximated by an hyperplane. A point $e_t$ is therefore approximated by a linear combination of its neighbors $e_i$ by $e_t = \sum_i \alpha_i e_i$ (the number of neighbors being arbitrarily set to K). The optimal weights $\alpha_1, \alpha_2, ..., \alpha_K$ minimizes the reconstruction error:

$$\varepsilon = \|e_t - \sum_i \alpha_i e_i\| \text{ subject to } \sum_i \alpha_i = 1 \qquad (11)$$

$\hat{\hat{g}}_t$ is approximated using the same weights $\alpha_1, \alpha_2, ..., \alpha_K$ applied to the corresponding neighbors in the gaze space by:

$$\hat{g}_t = \sum_i \alpha_i g_i \qquad (12)$$

The resulting likelihood is hence computed by

$$p(g_t|e_t) \propto exp(-\lambda(\|g_t - \hat{g}_t\|_2)) \qquad (13)$$

$\lambda$ is determined such that $p(g_t|e_t) \approx \varepsilon$ (where $\varepsilon$ is a very small positive number) when $\|g_t - \hat{g}_t\|_2 = D$ (where D magnitude is equivalent to the screen size - largest error). Generally, D is set to the diagonal of the display. Before applying LLE, dimensionality reduction such as PCA is used as a preliminary step for feature extraction to reduce the influence of noise as well as to speed up the LLE algorithm. More effectively, an incremental version of PCA and LLE may be used to make the system faster.

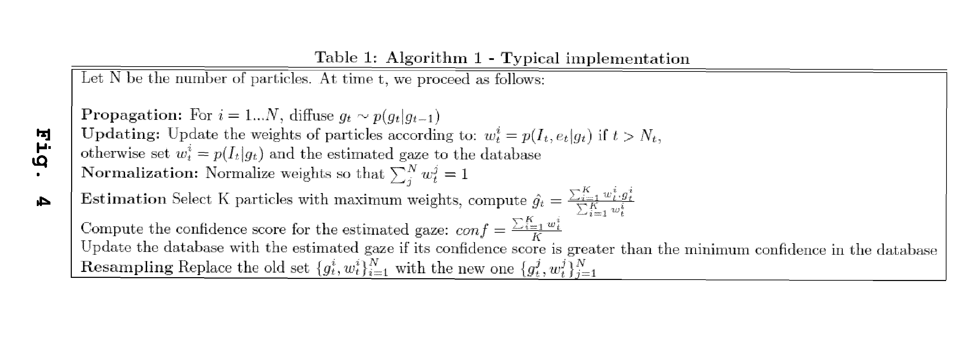

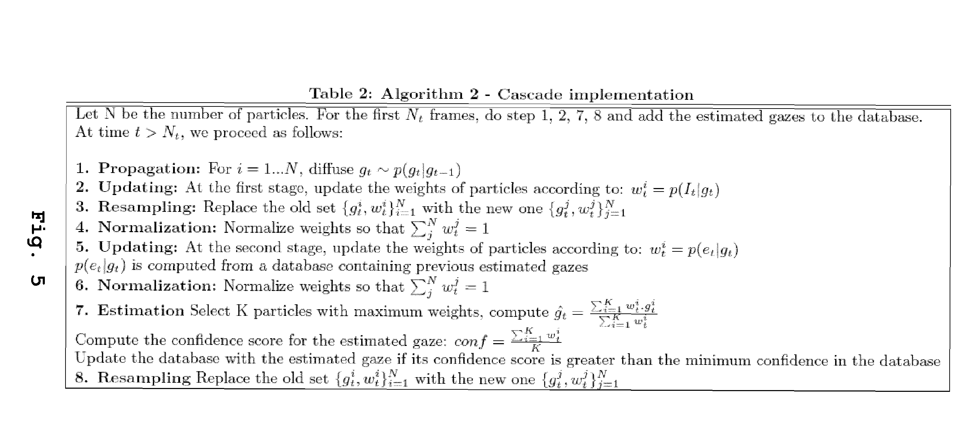

Particle filtering used for gaze tracking is much more challenging than in the context of object tracking. Firstly, the gaze position has a pixel or sub-pixel size in comparison with an object whose size is generally of thousand pixels. Secondly, the gaze distribution is spread all over the state space (full screen) while the movement of an object is restricted to a small area around its previous state. Hence, in order for the particle filter to reach a reasonable accuracy while maintaining the computational cost, the key idea is to reinforce the density of particles in "prosperous" regions and decrease the particle density in "less probable" regions. Two exemplary embodiments are presented. The first one is a typical implementation of the particle filter. The algorithm is given in Fig. 4. For this one, the likelihood model is considered as the product of the two likelihoods as described in Equation 6 and illustrated in Fig. 3 . The second exemplary embodiment consists in considering the whole estimation as a two-stage particle filter, where each stage corresponds to one of the two likelihood estimation $p(I_t|g_t)$ and $p(e_t|g_t)$. Here, the updating and resampling steps are done independently for each stage. By this way, the particles are redistributed in the first stage according to the first likelihood $p(g_t|I_t)$ $p(I_t|g_t)$ (more dense sampling in "salient" regions) and then weighted on the only basis of the second likelihood $p(e_t|g_t)$ to make the final gaze estimation. The algorithm for this implementation is given in Fig. 5.

In both algorithms, LLE has to be performed on a set of existing gaze points to compute $p(e_t|g_t)$. In the system according to the invention, for the first $N_t$ frames, the gaze is estimated using only the first stage of the particle filter (saliency map). These estimated gaze points and their corresponding eye images are added to a database that will be used to compute $p(g_t|et)$ after $N_t$ iterations. The database is then continuously updated with the gaze points which have high confidence scores.

The advantage of the cascade implementation is that the accuracy of the whole system relies on the second likelihood which is much more "representative" of the true gaze of the user. The saliency map is just used to redistribute particles, more in "prosperous" regions and less in "less probable" regions. A drawback of this implementation is also due to the fact that the final results depends on the second likelihood. If this likelihood is well modeled and if the saliency is well correlated to the true gaze, the performance of the whole system will be improved, otherwise, it inherits error from the regression step as well as from the bad resampling.

Test results of the method according to the invention are generated on the basis of two sets of video clips. The first set consists of 4 short clips, each of 1 minutes: a) The Kungfu Panda, b) The Mr & Mrs Smith c) The Cheaper and d) The Yuma. The second set consists of four long films: A) Space Odyssey, B) Dreams, C) Nuovo Cinema Paradiso and D) Forrest Gump. Each film is summarized to a 10-minute video clip by extracting and joining multiple 2-second excerpts taking all along the whole movie. The purpose of using these films is to be able to compare our results with the ones obtained by Y. Sugano, Y. Matsushita, and Y. Sato, "Calibration-free gaze sensing using saliency maps", In Proc. of the 23rd IEEE Conference on Computer Vision and Pattern Recognition (CVPR), June 2010 on the same test materials. The sizes of these videos are various with a 25Hz frame rate and the screen resolution was set to 1280x1024. A chin rest was used to set the head position and maintain a constant distant of 610 mm (two times of the screen height) between the test subjects and the display. Ground truth gaze data were recorded using a SMI RED eye tracker (50 Hz). The video of the user's eye was recorded with a consumer web camera (16Hz). All data (stimulus, ground truth and eye video) were synchronized before the processing step. Each session of the experiment took about 10 minutes on average to complete. The experiment is continuous and the eye tracker was not re-calibrated during a session. To extract the visual saliency maps, we use the attention model proposed by O. L. Meur, P. L. Callet, D. D. Barba, and D. Thoreau, "A coherent computational approach to model bottom-up visual attention", IEEE Transactions on Pattern Analysis and Machine Intelligence, pp. 802-817, 2006. This saliency model is also enhanced by the face detection using the Viola-Jones's algorithm (P. Viola and M. Jones, "Robust real-time object detection" International Journal of Computer Vision (IJCV), 2002.

For each session, we evaluated the estimated gaze by the whole system in comparison with:

1. The gaze estimated as the maximum peak from the saliency map

2. The gaze estimated using only the regression likelihood $p(g_t/e_t)$ and

3. The gaze from SMI gaze tracker (served as ground truth)

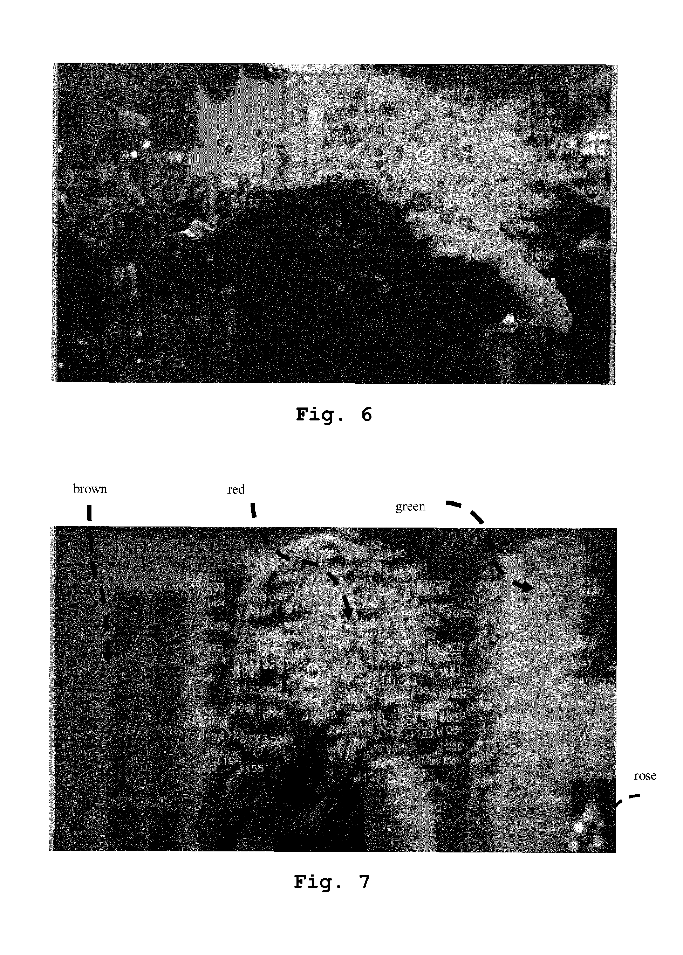

Fig. 6 and Fig. 7 show gaze estimation results according to the invention. The red circle is the final gaze of the whole system. The rose circle is the maximum peak saliency. The green circle is the result from the regression only (eye appearance observation). The brown dots denote the previous estimated gaze that are used for the regression and the green numbers indicate the clouds of particles.

According to the invention, a novel approach for gaze estimation without calibration is proposed. The approach is based on a probabilistic inference and resolved by customized conventional particle filter framework. Be noted that we can resolve the problem by another approach than particle filter which compute the integrals on all possible state space. This a with more accurate results but with a expense of time. Moreover, the proposed method does not requires subjects to watch a 10 minutes video for training. Finally, the proposed approach is general and can be extended to a a set of stage cascade particle filter. Each stage is a source information such as cameras, 2 eyes, head pose tracker, etc. Such an extension can handle head movement just by integrating a head pose tracker into the model as the additional stage particle filter.

This provides a core technology for a non-intrusive and cheap designed eye-tracker based on which many applications may be extrapolated. An interesting one could be an automatic adaptation of a VOD and STB navigation based on eye location preferences of users. To this end, the use of genetic algorithms for hierarchical learning is a potential approach.

## Claims

1. Method for eye gaze estimation with regard to a sequence of images, **characterized in that** it comprises the following steps:

   - determining a visual saliency map for an image;
   - using the visual saliency map for the image as an a-priori probability distribution of expected eye gaze;
   - receiving a sequence of pictures of the eyes of a user related to the sequence of images, the sequence of pictures of the eyes of a user being acquired with a camera for determining eye appearance;

- determining a sequence of saliency maps related to the sequence of images;
- determining eye gaze in a recursive manner based on the sequentially received pictures of the eyes of the user and the correspondingly determined sequence of visual saliency maps.

2. Method for eye gaze estimation with regard to a sequence of images according to claim 1, **characterized in that** eye gaze is determined using particle filtering methods.

3. Method for eye gaze estimation with regard to a sequence of images according to claim 2, **characterized in that** the particle filtering method comprises the steps of:

   - propagation/diffusion of eye gaze ;
   - updating of the weights of particles;
   - normalizing the weights;
   - selecting particles with maximum weights and estimate eye gaze; and
   - updating eye gaze if a confidence score is greater than a minimum confidence score.

4. Method for eye gaze estimation with regard to a sequence of images according to claim 3, **characterized in that** the particle filtering method is a cascaded method.

5. Method for eye gaze estimation with regard to a sequence of images according to any one of claims 1 to 4, **characterized in that** determining the eye gaze in a recursive manner is made with the assumption that a current state only depends on the previous state.

6. Method for eye gaze estimation with regard to a sequence of images according to claim any one of claims 1 to 5, **characterized in that** the eye picture and the images are conditionally independent.

7. Method for eye gaze estimation with regard to a sequence of images according to claim any one of claims 1 to 6, **characterized in that** the particle filtering uses a high density of particles in prosperous regions and a low density of particles in less probable regions.

Fig. 1

Fig. 2

Fig. 3

Table 1: Algorithm 1 - Typical implementation

Let N be the number of particles. At time t, we proceed as follows:

**Propagation:** For $i = 1...N$, diffuse $g_t \sim p(g_t|g_{t-1})$
**Updating:** Update the weights of particles according to: $w_t^i = p(I_t, e_t|g_t)$ if $t > N_t$, otherwise set $w_t^i = p(I_t|g_t)$ and the estimated gaze to the database
**Normalization:** Normalize weights so that $\sum_j^N w_t^j = 1$

Estimation Select K particles with maximum weights, compute $\hat{g}_t = \frac{\sum_{i=1}^K w_t^i \cdot g_t^i}{\sum_{i=1}^K w_t^i}$

Compute the confidence score for the estimated gaze: $conf = \frac{\sum_{i=1}^K w_t^i}{K}$
Update the database with the estimated gaze if its confidence score is greater than the minimum confidence in the database
**Resampling** Replace the old set $\{g_t^i, w_t^i\}_{i=1}^N$ with the new one $\{g_t^j, w_t^j\}_{j=1}^N$

Fig. 4

Fig. 5

Table 2: Algorithm 2 - Cascade implementation

Let N be the number of particles. For the first $N_t$ frames, do step 1, 2, 7, 8 and add the estimated gazes to the database. At time $t > N_t$, we proceed as follows:

1. **Propagation:** For $i = 1...N$, diffuse $g_t \sim p(g_t|g_{t-1})$
2. **Updating:** At the first stage, update the weights of particles according to: $w_t^i = p(I_t|g_t)$
3. **Resampling:** Replace the old set $\{g_t^i, w_t^i\}_{i=1}^N$ with the new one $\{g_t^j, w_t^j\}_{j=1}^N$
4. **Normalization:** Normalize weights so that $\sum_j^N w_t^j = 1$
5. **Updating:** At the second stage, update the weights of particles according to: $w_t^i = p(e_t|g_t)$
$p(e_t|g_t)$ is computed from a database containing previous estimated gazes
6. **Normalization:** Normalize weights so that $\sum_j^N w_t^j = 1$

7. **Estimation** Select K particles with maximum weights, compute $\hat{g}_t = \frac{\sum_{i=1}^K w_t^i \cdot g_t^i}{\sum_{i=1}^K w_t^i}$

Compute the confidence score for the estimated gaze: $conf = \frac{\sum_{i=1}^K w_t^i}{K}$

Update the database with the estimated gaze if its confidence score is greater than the minimum confidence in the database

8. **Resampling** Replace the old set $\{g_t^i, w_t^i\}_{i=1}^N$ with the new one $\{g_t^j, w_t^j\}_{j=1}^N$

Fig. 6

Fig. 7

Europäisches
Patentamt
European
Patent Office
Office européen
des brevets

# EUROPEAN SEARCH REPORT

Application Number

EP 12 30 5824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIYAZATO K ET AL: "Real-time estimation of human visual attention with dynamic Bayesian network and MCMC-based particle filter", MULTIMEDIA AND EXPO, 2009. ICME 2009. IEEE INTERNATIONAL CONFERENCE ON, IEEE, PISCATAWAY, NJ, USA, 28 June 2009 (2009-06-28), pages 250-257, XP031510739, ISBN: 978-1-4244-4290-4 * Section 3, 4, 5, 6 * | 1-7 | INV. G06F3/01 G06K9/00 G06K9/46 G06T7/20 |
| X | Yusuke Sugano ET AL: "Appearance-based Gaze Estimation using Visual Saliency", IEEE TRANSACTIONS ON PATTERN ANALYSIS AND MACHINE INTELLIGENCE, 1 May 2012 (2012-05-01), pages 1-14, XP055046490, DOI: 10.1109/TPAMI.2012.101 Retrieved from the Internet: URL:http://ieeexplore.ieee.org/ielx5/34/43 59286/06193107.pdf?tp=&arnumber=6193107&is number=4359286 [retrieved on 2012-12-04] * Section 2, Figure 2 and 3 * | 1-7 | |
| A | LILI MA ET AL: "Visual Attention Model Based Object Tracking", 21 September 2010 (2010-09-21), ADVANCES IN MULTIMEDIA INFORMATION PROCESSING - PCM 2010, SPRINGER BERLIN HEIDELBERG, BERLIN, HEIDELBERG, PAGE(S) 483 - 493, XP019151532, ISBN: 978-3-642-15695-3 * Section 3 * | 7 | TECHNICAL FIELDS SEARCHED (IPC) G06F G06K G06T |

-/--

The present search report has been drawn up for all claims

| Place of search | Date of completion of the search | Examiner |
|---|---|---|
| The Hague | 11 December 2012 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 12 30 5824 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIXU CHEN ET AL: "Probabilistic gaze estimation without active personal calibration", COMPUTER VISION AND PATTERN RECOGNITION (CVPR), 2011 IEEE CONFERENCE ON, IEEE, 20 June 2011 (2011-06-20), pages 609-616, XP032038177, DOI: 10.1109/CVPR.2011.5995675 ISBN: 978-1-4577-0394-2 * Section 4 * ----- | 1-7 | |

TECHNICAL FIELDS SEARCHED (IPC)

The present search report has been drawn up for all claims

| Place of search | Date of completion of the search | Examiner |
|---|---|---|
| The Hague | 11 December 2012 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                  
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. H. TAN ; D. J. KRIEGMAN ; N. AHUJA.** Appearance-based eye gaze estimation. *Proceedings of the Sixth IEEE Workshop on Applications of Computer Vision (WACV,* 2002, 191-195
- **Y. SUGANO ; Y. MATSUSHITA ; Y. SATO.** Calibration-free gaze sensing using saliency maps. *Proc. of the 23rd IEEE Conference on Computer, Vision and Pattern Recognition (CVPR,* June 2010
- **R. VALENTI ; N. SEBE ; T. GEVERS.** What are you looking at? improving visual gaze estimation by saliency. *International Journal of Computer Vision,* 2012
- **Y. WU ; E. BLASCH ; G. CHEN ; L. BAI ; H. LING.** *Multiple source data fusion via sparse representation for robust visual tracking,* July 2011, 1-8

- **Y. SUGANO ; Y. MATSUSHITA ; Y. SATO.** Calibration-free gaze sensing using saliency maps. *Proc. of the 23rd IEEE Conference on Computer Vision and Pattern Recognition (CVPR,* June 2010
- **O. L. MEUR ; P. L. CALLET ; D. D. BARBA ; D. THOREAU.** A coherent computational approach to model bottom-up visual attention. *IEEE Transactions on Pattern Analysis and Machine Intelligence,* 2006, 802-817
- **P. VIOLA ; M. JONES.** Robust real-time object detection. *International Journal of Computer Vision (IJCV,* 2002